# EUROPEAN PATENT SPECIFICATION

(11) **EP 0 529 686 B1**
(45) Date of publication and mention of the grant of the patent: **09.07.1997**
(21) Application number: 92117048.6
(22) Date of filing: 08.10.1987
(51) Int. Cl.: G05D 7/06, B05B 12/08, B05D 1/02

(54) **Method of compensating for changes in the flow characteristic of a fluid being dispensed from a nozzle**
Verfahren zur Kompensation der Fliesseigenschaftenveränderungen einer durch eine Düse abgegebene Flüssigkeit
Procédé pour compenser les variations des propriétés d'écoulement d'un fluide distribué par une buse

(30) Priority: 30.10.1986 US 924940
(43) Date of publication of application: 03.03.1993
(62) Divisional of application: 87907197.5
(73) Proprietor: NORDSON CORPORATION, Westlake Ohio 44145-1148 (US)
(72) Inventor: Price, Richard P., Parma Heights, Ohio 44130 (US)
(74) Representative: Eisenführ, Speiser & Partner

(56) References cited:
- EP-A- 0 192 166
- FR-A- 2 077 892
- PATENT ABSTRACTS OF JAPAN vol. 7, no. 168 (P-212)(1313) 23 July 1983& JP-A-58 75 027 ( OVAL KIKI KOGYO K.K. ) 6 may 1983

## Description

The present invention relates to a method for dispensing viscous fluid materials such as lubricants, sealants and adhesives onto a workpiece at a controlled rate of a flow which can be adjusted to compensate for changes in the relative speed between the dispenser and the workpiece.

When dispensing viscous fluids such as certain lubricants, adhesives sealants and the like, it is often necessary to apply the material to the surface of a workpiece in a bead containing a desired amount of material per unit length. In high production processes or where the bead of material must be positioned with accuracy, robot arms are often used to apply the material by rapidly guiding a dispensing nozzle in a programmed pattern over the surface of the workpiece. Depending on the application, the fluid being dispensed may either be projected some distance from the nozzle in a high velocity stream or extruded from the nozzle at lower velocity with the nozzle located closer to the workpiece. In either case, the amount of material applied per unit of lineal distance along the bead will vary according to both the flow rate of material discharged from the dispensing nozzle and the speed of the nozzle with respect to the workpiece.

For example, in the automotive industry it is necessary to apply a uniform bead of sealant around the periphery of the inside surface of automobile doors before joining the inside panel to the door. Along long, straight portions of the pattern, a robot arm can move the nozzle quickly. However, where the desired bead pattern changes direction abruptly, such as around the corners of a door panel, the robot arm must be slowed down to achieve a required bead positioning accuracy. It can be appreciated that if the flow rate of the dispensed fluid material is held fixed, the amount of material in the applied bead will increase as the robot arm is decelerated to negotiate changes in direction and will decrease as the robot arm is accelerated.

In the prior art, one attempt to deal with this problem has been to apply a toolspeed signal emanating from the robot controller to a voltage-controlled D.C. motor drive to control the speed of a ball screw mechanism driving the plunger of a shot pump filled with fluid. The shot pump is connected to the dispensing nozzle on the robot arm by way of a length of flexible hose. The toolspeed signal applied to the D.C. drive varies with the speed of the nozzle relative to the workpiece. As the rate of travel of the shot pump plunger changes, so too does the flow rate from the nozzle. Thus, the rate at which fluid is dispensed is controlled in open-loop fashion according to the speed of the nozzle.

Such a system suffers a number of deficiencies. First, it is inherently slow to respond Therefore, only limited control of bead size is possible. In addition to the delays associated with the response of the D.C. drive and mechanical system driving the plunger, the flexible hose connected between the shot pump and the nozzle carried by the robot arm introduces significant response lag into the system. With a hose only 10 feet long, and depending on supply pressure and the characteristics of the fluid being dispensed, it may take a second or more for a change in pressure at the shot pump to be reflected in a corresponding change in flow at the nozzle. Thus, very precise control of bead size is difficult particularly during rapid changes in the speed of the robot arm. In addition to these performance limitations, such systems have other practical disadvantages. The shot pump itself should be capable of holding at least as much material as required to be applied to an entire workpiece. Accordingly, the pump and its associated mechanical drive are too bulky and massive to be mounted on the robot arm with the dispensing nozzle. The mechanical components and D.C. drive controls together may weigh up to several hundred pounds. Further, such a system is expensive to maintain and occupies a significant amount of production floor space.

Another type of system known in the prior art uses a more compact dispenser having a motor driven metering valve which receives a continuous supply of material by way of a flexible hose. The dispenser is mounted on the robot arm and includes a servomotor or stepper motor which controls the metering valve to adjust the flow in accordance with the speed of the dispensing nozzle as indicated by a toolspeed signal emanating from the robot. Closed-loop control of flow is effected by a feedback signal indicative of material flow deriving, at some point in the system remote from the dispensing nozzle. This feedback signal may be derived by sensing the displacement of the supply pump using an LVDT or potentiometer connected to the crosshead of the pump or by using a positive displacement flow-meter connected in line with the flexible hose which feeds the dispenser. In addition to this main control loop, such a system can incorporate a pressure sensor at the nozzle of the dispenser to shut off under specified conditions as described in EP-A-0-163-069. This reference discloses the use of one or pressure sensors located in the wall of the dispensing nozzle to derive a pair of signals, one of which is used to indicate the presence of bubbles, the other of which indicates the flow of the liquid. The patent states that the latter signal can be derived for example from a pair of contacts connected to an elastic pressure-transmitting element which keeps the contacts closed as long as the pressure at the nozzle exceeds a certain value. In the event a clog develops in the flow channel, the flow signal can be used to initiate a shutdown of the system or provide an indication. Similar action can be taken should a bubble be sensed at the nozzle.

This type of system also has significant performance limitations. Even though the material being dispensed is metered by a dispenser mounted on the robot arm rather than from a remote metering device such as the shot pump system described above, the response time of the system is still relatively slow. As a consequence, the ability of the system to control bead size is limited, especially during rapid changes in the relative speed between the dispenser nozzle and the workpiece.

It is an objective of the invention to provide a method of compensating for changes in the flow characteristics of a fluid being dispensed from a nozzle under the control of a metering valve in order to maintain the volume of fluid dispensed over a predetermined interval at a desired setpoint.

It is a further objective of the invention to provide a method for periodically correcting for changes in the intrinsic viscosity of the fluid being dispensed in order to dispense a desired amount of material to each workpiece in a lot.

In order to accomplish the above objects, according to the invention, there is provided a method of compensating for flow characteristic changes of a fluid being dispensed from a nozzle onto a workpiece, the nozzle being in fluid communication with a metering valve responsive to a control signal, the method comprising the steps of:
generating the control signal to provide a desired flow of the fluid through the nozzle, such control signal being correlated to at least the flow rate of the fluid; and characterized by performing the following steps:
(a) producing a feedback signal correlated to the flow rate of the fluid being dispensed from the nozzle;
(b) generating a driving signal correlated to at least one of the following:
   i) the dynamic flow characteristics of the dispensed fluid, said dynamic flow characteristics including pressure flow non-linearities introduced by non-newtonian viscosity characteristics of the fluid; and
   ii) intrinsic viscosity changes of the fluid caused by phenomenon other than shear effects, including changes in temperature of the material as well as viscosity changes from one batch of material to another, or variations of viscosity of the material within a batch; and
(c) generating the control signal as a function of said feedback signal and said driving signal to cause the metering valve to dispense a desired flow of fluid.

Further advantages embodiments of the method are defined in the subclaims 2 to 21.

These and other advantages will be readily apparent from the following detailed description of a preferred embodiment of the invention and from the accompanying drawings wherein like reference numerals designate like items.

Fig. 1 is a schematic cross sectional view illustrating a preferred embodiment of a dispensing apparatus constructed according to the invention.

Fig. 2 is a block diagram illustrating a preferred embodiment of a system for dispensing fluid materials according to the invention.

Fig. 3 is a block diagram illustrating a portion of a second preferred embodiment of a system for dispensing fluid materials according to the invention.

Fig. 4 is a flow chart illustrating the operation of the embodiment of Fig. 3.

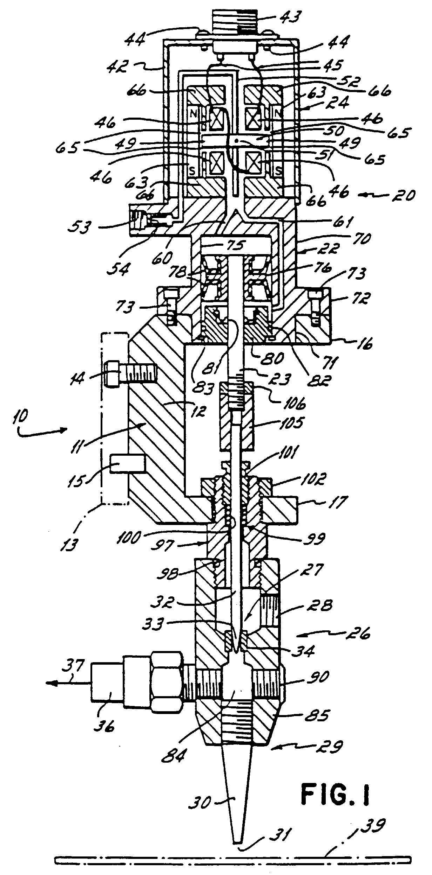

Referring now to Fig. 1 a preferred embodiment of a dispensing gun 10 constructed according to the invention is shown. Gun 10 includes a C-shaped frame 11 having a mounting plate 12 adapted to be secured to the tool mounting face 13 of a robot arm by means of one or more cap screws 14 and alignment pins 15. Frame 10 is preferably constructed of a rigid light weight material such as aluminum alloy and further includes, extending outwardly from mounting plate 12, an upper portion 16, and an opposed lower portion 17. The upper portion 16 of frame 11 carries a servo actuator 20 which may consist of any of a number of types of compact, light weight linear actuators offering rapid response. Preferably, actuator 20 comprises a double-acting air cylinder 22 having a piston rod 23 whose degree of extension is controlled by an electrically actuated pneumatic servovalve 24 disposed atop air cylinder 22. The lower portion 17 of frame 11 carries a metering valve assembly 26 having a needle valve 27 located between a fluid inlet 28 and a dispensing nozzle 29 which includes a nozzle end 30 having an outlet 31. For best control, needle valve 27 is located as close to nozzle 29 as practical and includes a valve stem 32 having a generally conical end 33 and a valve seat 34. Valve stem 32 is connected to piston rod 23 so that the position of its conical end 33 relative to valve seat 34 and hence, the flow rate of fluid discharged from nozzle 29 is controlled in accordance with the electrical input of electro-pneumatic servovalve 24. A transducer 36 located just downstream of needle valve 27 generates an electrical signal 37 correlated to the rate of flow of fluid discharged from nozzle 29. As will be described in further detail below, signal 37 is preferably used as a feedback signal to control the rate of flow of fluid dispensed from nozzle 29 in accordance with a desired driving signal. In robotic applications, the driving signal can vary with the relative speed between nozzle 29 and the workpiece 39 to accurately control the amount of fluid per unit length contained in the bead deposited on the surface of the workpiece 39.

Linear actuator 20 may incorporate any of a number of suitable types of fast responding electrically actuated servovalves including jet-pipe, nozzle and flapper or spool types. The details of the construction of actuator 20 are within the purview of those skilled in the art, and accordingly, do not constitute the claimed invention. In the preferred embodiment illustrated in Fig. 1, actuator 20 comprises a jet-pipe electro-pneumatic servovalve 24 which operates a double-acting air cylinder 22. Servovalve 24 includes a housing 42 which supports a threaded, electrical connector 43 secured thereto by screws 44. Wired to connector 43 by way of leads 45 are a pair of series-connected coils 46 surrounding opposing ends 49 of an armature 50 which is mounted to pivot about pivot point 51. A hollow, inverted U-shaped jet pipe 52 has one leg connectable to a regulated air supply of about 100 PSI nominal pressure through a threaded inlet 53 in air cylinder 22 by way of filter 54. The opposite leg of jet-pipe 52 is secured near its center to armature 50 so that when armature 50 is pivoted clockwise by energizing coils 46 in one polarity, the flow emanating from jet pipe 52 is diverted toward a first port 60. Similarly, when coils 46 are energized in the opposite polarity, armature 50 pivots counter-clockwise to direct the flow from jet pipe 52 toward a second port 61 of air cylinder 22. In either polarity, the degree of the deflection of jet pipe 52 and hence, the pressure in ports 60 and 61 is proportional to the magnitude of the current flowing in coils 46. Armature 50 is spring centered and magnetically biased such that when coils 46 are in a de-energized state, jet pipe 52 is centered in a neutral position as shown so that the pressures in ports 60 and 61 tend to be equally balanced. Magnetic bias is provided by a pair of permanent magnets 63 each of which communicate with the armature field by way of a flux across air gaps 65. This flux is conducted to gaps 65 by way of four magnetically permeable members 66 arranged as shown.

Double acting air cylinder 22 includes an aluminum alloy cylinder body 70, the end of which is received in a hole 71 in the upper portion 16 of frame 11. A flange 72 is used to secure the body 70 of air cylinder 22 to the upper portion 16 of frame 11 using cap screws 73. Cylinder body 70 includes first and second ports 60, 61, threaded air supply inlet 53 and filter 54 as well as a cylinder bore 75. Received within bore 75 is a piston 76 provided with a pair of seals 78 as well as piston rod 23 which extends axially from bore. The portion of bore 75 located above piston 76 communicates with first port 60 while the portion beneath piston 76 is connected to second port 61. The force with which piston 76 drives needle valve 27 depends upon the differential pressure between ports 60 and 61 which, as explained above, is determined by the deflection of jet pipe 50 due to the current flowing in coils 46. Piston is retained within cylinder bore 75 by a cap 80 through which passes piston rod 23. To prevent air leakage cap 80 is provided with a seal 81 in the area of piston rod 23 and an external O-ring seal 82 between the outer circumference of cap 80 and the surface of cylinder bore 75. Cap 80 is itself retained in the end of cylinder bore 75 by a snap-ring 83.

Metering valve assembly 26 includes a rigid, non-resilient valve body 85 constructed as shown in Fig. 1 preferably of metal. The lower end of valve body 85 includes a passage 84 whose lower end is threaded to accept the flow restricting nozzle 29 of a desired configuration having a discharge outlet 31. Passage 84 is intersected by one or more radial threaded holes, one of which receives transducer 36 and the others of which are sealed by means of plugs 90. Located immediately upstream of passage 84 and as closely adjacent thereto as practicable, valve body 85 houses needle valve 27. For long life, both valve stem 32 and valve seat 34 are preferably fabricated of a hard material such as sintered tungsten carbide. A fluid supply inlet 28 enters valve body 85 upstream of needle valve 27. Inlet 28 is threaded so that a hose can be attached to supply under pressure the fluid material to be dispensed.

Valve body 85 threads onto the lower end of a bonnet 97 and is sealed with respect thereto by means of an O-ring seal 98. Bonnet 97 includes an internal packing gland 99 which holds a plurality of annular PTFE packing seals 100. Seals 100 are retained in sealing but nonbinding compression about valve stem 32 by means of any adjustable gland nut 101. To attach metering valve assembly 26 to frame 11, bonnet 97 is threadably received by the extending lower portion 17 of frame 11 and secured thereto at a desired angular orientation by means of a locknut 102. Metering valve assembly 26 is connected to actuator 20 by means of a coupling 105 which is fixedly attached to the upper end of valve stem 32 and threaded onto the lower end of piston rod 23 and held in place by a second locknut 106.

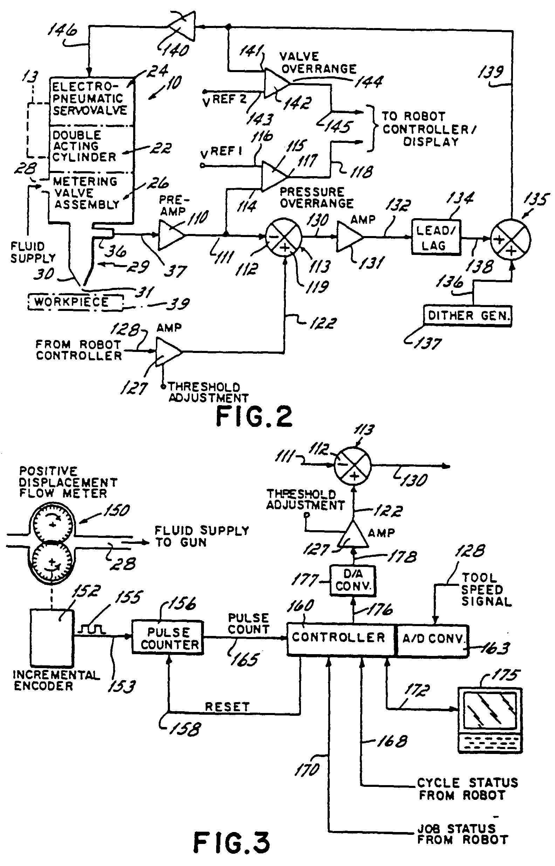

Transducer 36 may comprise any suitable transducer capable of generating a signal 37 indicative of the rate of flow of the fluid dispensed from nozzle 30. Preferably, transducer 36 is a strain gauge pressure transducer operably disposed to sense the instantaneous fluid pressure at a location inside passage 84 immediately downstream of needle valve 27. One pressure transducer suitable for this purpose is model A205 manufactured by Sensotec of Columbus, Ohio. The flow of a viscous newtonian fluid at low Reynolds numbers is substantially linearly proportional to the pressure drop across a nozzle or tubular restrictor placed in the flow path. It can be appreciated that a pressure transducer 36 located as described will sense the pressure drop across nozzle 29. This is so because the outlet 31 of nozzle 29 is at atmospheric pressure and there is very little pressure drop across passage 84 in relation to the pressure drop across nozzle 30. Thus, transducer 36 generates a pressure signal 37 which represents the instantaneous rate of flow from outlet 31. As previously noted, due to the proximity of needle valve 27 this flow is closely correlated to the flow through needle valve 27. Since flow rate is sensed by pressure transducer 37 and controlled by needle valve 27 both in close proximity to nozzle 29, precise control over flow rate, and hence, the amount of fluid per unity length deposited by gun 10 on workpiece 39 can be achieved by connecting dispensing gun 10 to form a fast responding closed-loop servo control system as described now with particular reference to Fig. 2.

Dispensing gun 10 is carried by the tool mounting surface 13 of a robot having a controller (not shown) programmed to guide nozzle 29 over the surface of a workpiece to dispense a bead of fluid thereon in a desired pattern. The metering valve assembly 26 of gun 10 communicates at its fluid inlet 28 with a continuous pressurized supply of fluid. Transducer 36 continuously senses the pressure drop across nozzle 29 to generate a pressure signal 37 correlated to the rate of flow of fluid discharged from the outlet 31 of nozzle end 30. Signal 37 is received and amplified by a preamp 110 which generates an output signal 111 appearing at the minus input 112 of a summing junction 113 as well as at a first input 114 of a comparator 115 whose second input 116 receives a fixed, selectable voltage reference, VREF1 and whose output 117 generates a digital PRESSURE OVERRANGE signal 118 which is received by the robot controller. If the magnitude of output signal 111 exceeds VREF1, digital PRESSURE OVERRANGE signal assumes a logical 1 value. This can occur for example if needle valve 27 opens too far. In such event, the robot controller can be programmed to present a fault indication, shut down the system or take other appropriate action. Summing junction 113 also includes a plus input 119 which receives a driving signal 122. In the embodiment of Fig. 2, driving signal 122 is generated by an amplifier 127 in accordance with a toolspeed signal 128 from the robot. Toolspeed signal 128 is an analog voltage signal available from the robot controller which varies according to the speed of travel of gun 10 relative to workpiece 39. Through the robot controller, the gain cf signal 128 can be adjusted by way of a toolspeed multiplier selected to provide a desired flow rate as a function of speed of travel. Amplifier 127 is an operational amplifier whose gain is selected to properly scale toolspeed signal 128 so that driving voltage 122 will be within a range compatible with the rest of the circuit. Amplifier 127 is preferably connected as a precision limiter such that for inputs between zero volts and an adjustable threshold voltage, the voltage of driving signal executes a decisive step in a direction proper to close needle valve 27. Typically, the threshold voltage would be adjusted so that when toolspeed signal 128 is about 50 mV or less, needle valve 27 is driven positively closed. This prevents needle valve 27 from leaking by providing a negative bias current to servovalve 24, effective to drive needle valve 27 positively closed at times when toolspeed signal 128 is not present or quite small. Summing junction 113 produces an analog error signal 130 whose magnitude and polarity is equal to the algebraic difference between the output signal 111 of preamp 110 and driving signal 122. Error signal 130 is received by an amplifier 131 whose gain is adjusted for optimum system stiffness. The output signal 132 from amplifier 131 is received by a lead/lag compensation network 134 designed and adjusted according to standard control technique to stabilize closed-loop system response and maximize response speed with minimum overshoot. A second summing junction 135 then adds a dither signal 136 from a dither generator 137 to the output signal 138 of lead/lag network 134. Dither signal 136 is an A.C. signal whose magnitude preferably several percent of the fullscale value of signal 138. Dither signal 136 improves system resolution by overcoming static friction effects. Dither signal 136 accomplishes this by causing air cylinder 22 to oscillate very slightly during system operation, as is commonly practiced in the art. Summing junction 135 provides an analog voltage signal 139 whose magnitude and polarity is determined by the algebraic sum of signal 138 and dither signal 136. Signal 139 is received by a current driver 140 as well as by the first input 141 of a comparator 142 whose second input 143 receives a fixed, selectable voltage reference, VREF2 and whose output 144 generates a digital VALVE OVERRANGE SIGNAL 145. In the event the magnitude of signal 139 exceeds VREF2, digital VALVE OVERRANGE signal assumes a logical 1 state. Such a condition may arise for example if the supply of fluid to dispensing gun 10 is cutoff or if supply pressure is inadequate to meet the demand imposed by driving signal 122. Like PRESSURE OVERRANGE signal 118, VALVE OVERRANGE signal 145 is directed to the robot controller which may be programmed to generate a fault indication, shut the system down or otherwise initiate corrective action.

Current driver 140 generates an analog control current signal 146 which is applied to the coils 46 of servovalve 24. This causes jet pipe 52 to be diverted toward first port 60 or second port 61, depending on the magnitude and direction of control current signal 146, to move the piston 76 of air cylinder 22 either downward or upward, respectively. Downward movement of piston 76 tends to close needle valve 27 of metering valve assembly 26 thereby reducing the flow of fluid while upward movement of piston 76 tends to open needle valve 27 thereby increasing the flow of fluid.

In operation, the system functions as a closed loop servo system responsive to the pressure drop across nozzle 29 as sensed by pressure transducer 36. With needle valve 27 initially closed, no flow occurs and the pressure drop across nozzle 29 is zero. Assuming toolspeed signal 128 is less than the threshold voltage associated with amplifier 127, amplifier 127 generates a driving signal 122 of the proper polarity and of sufficient magnitude to generate a control current 146 to deflect jet pipe 52 toward first port 60. This holds piston 76 down so that needle valve 27 is held closed under force thereby preventing leakage. This condition is maintained until toolspeed signal 128 rises above the threshold voltage of amplifier 127 indicating that flow should commence. When this occurs, driving signal reverses polarity. Since there is initially no flow, pressure signal 137 is at its zero value. Accordingly, an error signal 130 whose magnitude is determined by the difference between pressure signal 37 and driving signal 122 will cause a control current 146 to be applied to coils 46 in such a polarity as to cause jet pipe 52 to deflect toward second port 61. In response, piston 76 moves upward causing needle valve 27 to open by lifting the conical end of valve stem 32 away from valve seat 34. As the pressure signal 37 generated by pressure transducer 36 increases error signal 130 and control current 146 both decrease and jet pipe 52 moves toward its null position. As the pressure drop across nozzle 29 approaches a value corresponding to a desired flow rate jet pipe 52 causes needle valve 52 to remain open by an amount just sufficient to maintain the pressure drop across nozzle 29 at that value.

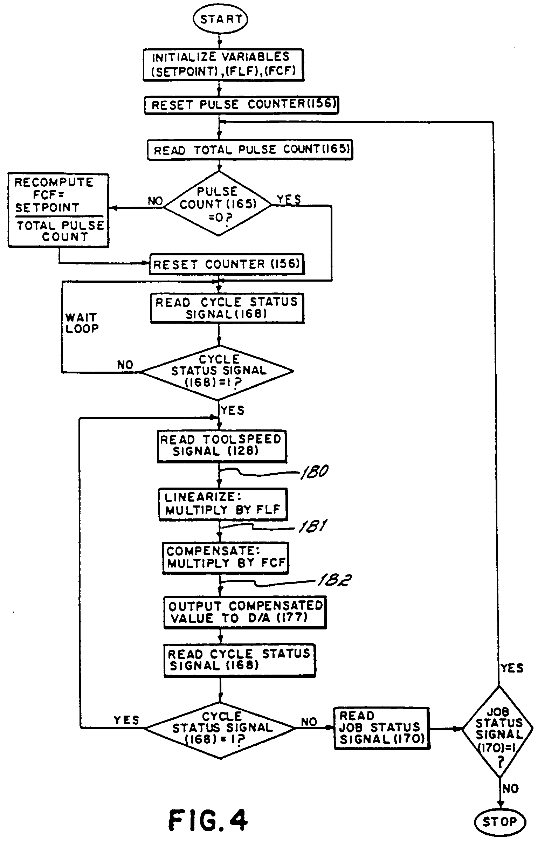

In some dispensing applications, the flow characteristics of the fluid supplied to dispensing gun 10 may be subject to change over time. For example if gun 10 is supplied fluid from a drum, the viscosity of the fluid can vary with changes in temperature as the drum sits in a warm production area after having been moved from a cold warehouse. Viscosity may also vary from one drum of fluid to the next or from the top of a given drum to the bottom. Without some means for compensating for such changes, the amount of material dispensed onto a workpiece 39 would be subject to undesirable variations. Also, when dispensing non-newtonian fluids, the overall instantaneous viscosity of the fluid varies with shear rate in a non-linear fashion. Thus, absent correction, shear induced by the geometry of nozzle 29 will result in a non-linear flow rate versus pressure signal 37 flow characteristic. This in turn would render the flow rate versus applied toolspeed signal 128 response non-linear. According to the invention, these problems are effectively addressed by deriving driving signal 122 in an alternate fashion as described now with additional reference to Figs. 3 and 4.

Fig. 3 illustrates a second preferred embodiment of the invention which is similar to the embodiment described above except for the manner in which driving signal 122 is generated. As illustrated in Fig. 3, the system of Fig. 2 is modified by adding a positive displacement flow meter 150 to the fluid supply line connected to the inlet 28 of dispensing gun 10. While it is desirable to locate flow meter 150 as close to gun 10 as possible it is not required to be mounted with the gun 10 on the robot arm. Flow meter 150 includes an incremental encoder 152 which produces an electrical output signal 153 comprising a series of pulses 155. Each pulse 155 represents a predetermined volume of fluid. Signal 153 is input to a pulse counter 156 which counts pulses 155 and is resettable to zero by a reset signal 158 which is generated by a microprocessor based controller 160 which, if desired may be part of the robot controller (not shown). However, to provide maximum system frequency response, controller 160 should run at high speed and is preferably dedicated principally to performing the operations described below. In addition to a microprocessor and associated hardware, controller 160 includes all necessary program and data memory as well as an analog to digital converter (A/D) 163 which receives the toolspeed signal 128 from the robot controller. Pulse counter 156 outputs its pulse count 165 to controller 160. Controller 160 also receives from the robot controller (not shown), a digital cycle status signal 168 and a digital job status signal 170. Cycle status signal assumes a logical 1 value whenever dispensing gun 10 should be operating. Job status signal 170 assumes a logical 1 valve when a production run is at an end. Controller 160 also communicates by way of an interface 172 with an input/output device 175 such as a keyboard terminal from which control commands and setpoint data are entered. Controller 160 also communicates by way of an output 176 with a digital to analog D/A converter 177 which generates an analog signal 178. Signal 178 is received by amplifier 127 which operates as described above with reference to Fig. 2. Amplifier 127 in turn generates driving signal 122 which is applied to the plus input 119 of summing junction 113 as described above to generate error signal 130. The manner in which driving signal 122 is derived may be further understood with additional reference now to Fig. 4 which illustrates the software program stored in controller 160 responsible for outputting the required data to D/A converter 177.

The program begins running by clearing all data memory and initializing all variables including a setpoint representing a desired total volume of fluid to be applied to a single workpiece 39. An appropriate set of pre-programmed flow linearizing factors (FLFs) are also initialized at this point. The FLF's are constants which represent factors by which toolspeed signal 128 must be multiplied in order to linearize system flow response such that when a given percentage of the full scale value of toolspeed signal 128 is applied to summing junction 113, the needle valve 27 of metering valve assembly 26 is positioned so that the same percentage of the full scale flow of fluid is discharged from nozzle outlet 31. FLF's are determined empirically from a measured curve of actual flow from outlet 31 of nozzle 30 versus voltage applied at input 119 of summing junction 113. Since the actual flow curve may vary depending on the geometry of needle valve 27 and nozzle 29 including nozzle end 30 as well as the flow characteristics of the particular type of fluid being dispensed and the supply pressure, the program loads a series of FLF's appropriate to account for a particular set of these conditions.

The program also sets a flow compensation factor (FCF) to an arbitrarily selected initial value. The FCF is a variable which compensates for changes in the flow characteristics which occur over time such as changes in intrinsic viscosity due to changes in temperature or other factors as discussed earlier. The FCF is recomputed once each job cycle that is, once per dispensing operation on a given workpiece 39. The FCF is defined as a factor by which the linearized toolspeed signal must be multiplied so that the total volume of fluid dispensed onto a workpiece 39 is substantially equal to the selected setpoint. Deviation from setpoint cannot be determined at the beginning of the first job cycle because there is no basis for comparison. Accordingly, FCF is preferably initialized at unity. The manner in which FCF is recomputed will be described below.

During initialization, the program resets pulse counter 156 to zero by outputting an appropriate reset signal 158 from controller 160 to counter 158. Next, the program causes controller 160 to read the total pulse count 165. The value of pulse count 165 represents the total volume of fluid dispensed during the previous job cycle. If pulse count is not zero, as will be the case except prior to the first job cycle, the program recomputes the flow compensation factor FCF as a quotient whose dividend is equal to the setpoint and whose divisor is equal to total pulse count 165. After the FCF is recomputed counter 156 is again reset in the manner described above. If pulse count 165 is equal to zero, as it will be at the beginning of the first job cycle, the FCF remains at its initialized valve.

Next, the program enters a loop in which it waits for the robot controller signal that a job cycle is in progress. In the wait loop, the program continuously reads cycle status signal 168 and tests to determine whether it has assumed a logical 1 value. If not, the program stays in the loop. By changing status signal 168 from a logical zero value to a logical 1 value, the robot controller indicates that dispensing should commence. At that point, the program directs controller 160 to read the digital value 180 representing the magnitude of toolspeed signal 128 from the output of A/D converter- 163. Based on the magnitude of the digital value, the program selects from a look-up table the corresponding flow linearizing factor FLF from the set of FLF values loaded during initialization. Digital value 180 is then multiplied by the selected FLF value to yield a linearized toolspeed value 181. To adjust driving signal 122 so that the actual volume of fluid to be dispensed during the job cycle conforms to the setpoint despite changes in the flow characteristics of the fluid, such as changes in viscosity, the program next causes the linearized toolspeed value 181 to be multiplied by the flow compensation factor FCF to yield a corrected digital value 182 which is then output to D/A converter 177 whose output 178 is fed to amplifier 127 to generate driving signal 122.

Next, the program again reads cycle status signal 168 to determine whether dispensing should continue. If not, job status signal 168 will not be a logical 1 value, indicating the present cycle has ended. In that case the program causes controller 160 to read job status signal 170 emanating from the robot controller. If job status signal 170 is not a logical 1 value, this indicates that the last workpiece 39 in a given production lot has been finished and the program is stopped. If the production run is not complete, job status signal 170 will remain at a logical 1 value and the program will loop back to the point at which pulse count 165 is read. Although the program described recomputes a flow compensation factor once per job cycle, it should be noted that such periodic adjustments can be made more or less frequently depending on how rapidly the flow characteristics of the dispensed fluid can be expected to undergo significant change.

The advantages realized by the invention are numerous. Most notably, the dispensing systems described provide rapid and precise control of fluid flow rate. Such systems have been found to have an upper 3dB frequency response cutoff point exceeding 10 hertz.

While the dispensing gun 10 can be directed by any desired means including manually the invention is particularly well adapted for use with robots. Dispensing gun 10 is light weight, compact and easy to maintain. Further, the dispensing systems of the invention provide for automatic flow rate adjustment in accordance with the relative speed between the dispensing gun 10 on the robot arm and the workpiece.

Thus, the invention permits close control over the volume per unit length of the dispensed bead of fluid even during rapid acceleration and deceleration as normally occurs as the robot arm changes its direction of movement. The invention also provides means for periodically compensating for perturbations in the flow characteristic of the fluid being dispensed to insure that the volume of fluid dispensed always conforms closely with a desired setpoint.

## Claims

1. A method of compensating for flow characteristic changes of a fluid being dispensed from a nozzle (29) onto a workpiece (39), the nozzle (29) being in fluid communication with a metering valve (26) responsive to a control signal (146), the method comprising the steps of:
generating the control signal (146) to provide a desired flow of the fluid through the nozzle (29), such control signal being correlated to at least the flow rate of the fluid; and
characterized by performing the following steps:
(a) producing a feedback signal (37) correlated to the flow rate of the fluid being dispensed from the nozzle (29);
(b) generating a driving signal (122) correlated to at least one of the following:
i) the dynamic flow characteristics of the dispensed fluid, said dynamic flow characteristics including pressure flow non-linearities introduced by non-newtonian viscosity characteristics of the fluid; and
ii) intrinsic viscosity changes of the fluid caused by phenomenon other than shear effects, including changes in temperature of the material as well as viscosity changes from one batch of material to another, or variations of viscosity of the material within a batch; and
(c) generating the control signal (146) as a function of said feedback signal (37) and said driving signal (122) to cause the metering valve (26) to dispense a desired flow of fluid.

2. The method of claim 1 wherein the step of modifying said control signal (146) further comprises the steps of:
providing a tool speed signal (128) correlated to relative motion between the nozzle (29) and the workpiece (39);
altering said tool speed signal (128) as a function of the dynamic flow characteristics of the fluid to produce a linearized tool speed value (181); and
adjusting said linearized tool speed value (181) as a function of the intrinsic viscosity changes of the fluid to produce a driving signal (122).

3. The method of claim 2 wherein said step of adjusting said tool speed signal (128) further comprises the steps of:
selecting a flow linearizing factor (FLF) based on a known flow of fluid from the nozzle (29) as a function of said control signal (146) for a given set of conditions; and
multiplying said tool speed signal (128) by said flow linearizing factor (FLF) to produce said linearized tool speed value (181).

4. The method of anyone of the claims 1 to 3 wherein said step of adjusting the tool speed signal (128) further comprises the steps of:
measuring a first volume of fluid delivered to the metering valve (26) during an interval of time;
calculating a flow compensation factor (FCF) as a function of the first volume of fluid and a reference; and
adjusting said tool speed signal (128) as a function of said flow compensation factor (FCF).

5. The method of claim 4 wherein said step of adjusting the tool speed signal (128) further comprises the step of multiplying said tool speed signal (128) by said flow compensation factor (FCF).

6. The method of claim 1 wherein the steps of modifying said control signal (146) for compensating for the dynamic flow characteristics also comprises the step of:
linearizing said control signal (146) to reduce the flow non-linearities introduced by the non-newtonian fluid.

7. The method of claim 6 wherein said step of linearizing said control signal (146) further comprises the steps of:
determining flow linearizing factors (FLF) based on known flows of the non-newtonian fluid from the nozzle (29) as a function of the control signal (146) for a given set of conditions;
selecting a first flow linearizing factor (FLF); and
altering said control signal (146) as a function of said first flow linearizing factor (FLF).

8. The method of claim 7 wherein the step of determining said flow linearizing factors (FLF) further comprises the step of determining a series of flow linearzing factors (FLF) based on known flows of the non-newtonian fluid from the nozzle (29) as a function of said control signal (146) for given sets of conditions.

9. The method of claim 8 wherein said step of generating said control signal (146) further comprises the steps of:
providing a tool speed signal (128) correlated to relative motion between the nozzle (29) and the workpiece (39);
selecting said first flow linearizing factor (FLF) as a function of the tool speed signal (128); and
multiplying said tool speed signal (128) by said first flow linearizing factor (FLF) to produce a linearized tool speed value (181).

10. The method of claim 9 wherein the step of generating said control signal (146) further comprises the steps of:
producing said control signal (146) as a function of said feedback signal (37) and said linearized tool speed value (181), thereby compensating said control signal (146) as a function of the flow non-linearities introduced by the non-newtonian fluid and causing the metering value (26) to dispense the desired flow of the non-newtonian fluid.

11. The method of claim 1 further comprising the steps of:
a) measuring the volume of fluid delivered to the metering valve (26) during at least one interval;
b) calculating a correction factor (FCF) correlated to the difference between said measured volume and a setpoint,
c) multiplying a signal (181) by said factor to generate said driving signal (122), and
d) controlling said valve (26) in accordance with at least said driving signal (122) to maintain the volume of fluid dispensed at said desired setpoint.

12. The method of claim 11 wherein said controlling steps includes the step of applying a signal correlated to said driving signal (122) to a closed-loop feedback system coupled to said metering valve (26).

13. The method of claim 11 wherein said correction factor (FCF) comprises a quotient whose dividend is said setpoint and whose divisor is said measured volume of fluid.

14. The method of claim 1 further comprising the steps of:
a) delivering the fluid under pressure to the metering valve (26) located upstream of the nozzle (29);
b) measuring the volume of fluid delivered to said metering valve (26) over an interval of time generating a corresponding measurement signal, and
c) adjusting the control signal (146) in accordance with the difference between said measurement signal and a setpoint representing a desired volume of fluid to be dispensed during said interval so that said valve (26) maintains the volume of fluid dispensed at said setpoint.

15. The method of claim 14 wherein said adjusting step comprises the steps of:
calculating a correction factor (FCF) correlated to the difference between said measurement signal and said setpoint;
multiplying said driving signal (122) by said correction factor, and generating said control signal (146) from at least said driving signal (122).

16. The method of claim 15 wherein said generating step comprises the step of algebraically combining said difference with said feedback signal (37).

17. The method of claim 16 further comprising the step of:
generating said driving signal (122) in accordance with at least a toolspeed signal (128) of a robot (13) effecting relative movement between the nozzle (29) and a workpiece (39).

18. The step of claim 17 wherein said feedback signal (37) comprises a signal representing the pressure drop across said nozzle (29).

19. The method of claim 14 wherein said interval is a job cycle.

20. The method of claim 14 further comprising the steps of:
locating said valve (26) and said nozzle (29) in sufficiently close proximity to one another that very little fluid pressure drop occurs between said valve (26) and said nozzle (29);
sensing, at a locating between said valve (26) and said nozzle (29), a parameter correlated to the rate of flow of the fluid discharged from the nozzle (29) and generating said feedback signal (37), and
generating said control signal (146) from at least said feedback signal (37) and driving signal (122).

21. The method of claim 20 further comprising the steps of:
calculating a correction factor (FCF) correlated to the difference between said measurement signal and said setpoint;
multiplying said driving signal (122) by said correction factor (FCF), and
generating said control signal (146) from at least said driving signal (122).

## Patentansprüche

1. Verfahren zum Ausgleichen von Strömungseigenschaftsveränderungen einer aus einer Düse (29) auf ein Werkstück (39) verteilten Flüssigkeit, wobei die Düse (29) in Strömungsverbindung mit einem Strombegrenzungsventil (26) steht, das auf ein Stellsignal (146) ansprechend ist, umfassend die Schritte:
Erzeugen des Stellsignals (146), um einen Sollstrom der Flüssigkeit durch die Düse (29) vorzusehen, wobei das Stellsignal mindestens der Strömunggeschwindigkeit der Flüssigkeit entspricht; und
gekennzeichnet durch Ausführen der folgenden Schritte:
(a) Erzeugen eines Rückführsignales (37), das der Strömungsgeschwindigkeit der aus der Düse (29) verteilten Flüssigkeit entspricht;
(b) Erzeugen eines Steuersignales (122), das mindestens einem der folgenden entspricht:
i) den dynamischen Strömungseigenschaften derverteilten Flüssigkeit, wobei die dynamischen Strömungseigenschaften Druckströmungsnichtlinearitäten umfassen, die durch nicht-Newtonsche Viskositätseigenschaften der Flüssigkeit eingeführt werden; und
ii) Grundviskositätsänderungen der Flüssigkeit, die durch ein anderes Phänomen als Scherwirkungen verursacht werden, umfassend sowohl Temperaturänderungen des Materiales als auch Viskositätsänderungen von einer Charge des Materiales zur anderen oder Viskositätsänderungen des Materiales innerhalb einer Charge; und
c) Erzeugen des Stellsignales (146) als eine Funktion des Rückführsignales (37) und des Steuersignales (122), um das Verteilen eines Sollstromes der Flüssigkeit durch das Strombegrenzungsventil (26) zu bewirken.

2. Verfahren nach Anspruch 1, bei dem der Schritt des Modifizierens des Stellsignales (146) außerdem die Schritte umfaßt:
Vorsehen eines Werkzeuggeschwindigkeitssignales (128), das der relativen Bewegung zwischen der Düse (29) und dem Werkstück (39) entspricht;
Verändern des Werkzeuggeschwindigkeitssignales (128) als eine Funktion der dynamischen Strömungseigenschaften der Flüssigkeit, um einen linearisierten Werkzeuggeschwindigkeitswert (181) zu erzeugen; und
Einstellen des linearisierten Werkzeuggeschwindigkeitswertes (181) als eine Funktion der Grundviskositätsänderungen der Flüssigkeit, um ein Steuersignal (122) zu erzeugen.

3. Verfahren nach Anspruch 2, bei dem der Schritt des Einstellens des Werkzeuggeschwindigkeitssignales (128) außerdem die Schritte umfaßt:
Auswählen eines Strömunglinearisierungsfaktors (FLF) basierend auf einem bekannten Flüssigkeitsstrom aus der Düse (29) als eine Funktion des Stellsignales (146) für eine gegebene Reihe von Bedingungen; und
Multiplizieren des Werkzeuggeschwindigkeitssignales (128) mit dem Strömunglinearisierungsfaktor (FLF), um den linearisierten Werkzeuggeschwindigkeitswert (181) zu erzeugen.

4. Verfahren nach einem der Ansprüche 1 bis 3, bei dem der Schritt des Einstellens des Werkzeuggeschwindigkeitssignales (128) außerdem die Schritte umfaßt:
Messen eines ersten, während eines Zeitintervalles zum Strombegrenzungsventil (26) geförderten Flüssigkeitsvolumens;
Berechnen eines Strömungausgleichsfaktors (FCF) als eine Funktion des ersten Flüssigkeitsvolumens und einer Bezugsgröße; und
Einstellen des Werkzeuggeschwindigkeitssignales (128) als eine Funktion des Strömungausgleichsfaktors (FCF).

5. Verfahren nach Anspruch 4, bei dem der Schritt des Einstellens des Werkzeuggeschwindigkeitssignales (128) außerdem den Schritt des Multiplizierens des Werkzeuggeschwindigkeitssignales (128) mitdem Strömungausgleichsfaktor (FCF) umfaßt.

6. Verfahren nach Anspruch 1, bei dem der Schritt des Modifizierens des Stellsignales (146) zum Ausgleichen der dynamischen Strömungseigenschaften außerdem den Schritt umfaßt:
Linearisieren des Stellsignales (146), um die durch die nicht-Newtonsche Flüssigkeit eingeführten Strömungsnichtlinearitäten zu reduzieren.

7. Verfahren nach Anspruch 6, bei dem der Schritt des Linearisierens des Stellsignales (146) außerdem die Schritte umfaßt:
Bestimmen von Strömungslinearisierungsfaktoren (FLF) basierend auf bekannten nicht-Newtonschen Flüssigkeitsströmen aus der Düse (29) als eine Funktion des Stellsignales (146) für eine gegebene Reihe von Bedingungen;
Auswählen eines ersten Strömunglinearisierungsfaktors (FLF); und
Verändern des Stellsignales (146) als eine Funktion des ersten Strömunglinearisierungsfaktors (FLF).

8. Verfahren nach Anspruch 7, bei dem der Schritt des Bestimmens der Strömunglinearisierungsfaktoren (FLF) außerdem den Schritt des Bestimmens einer Reihe von Strömunglinearisierungsfaktoren (FLF) basierend auf bekannten nicht-Newtonschen Flüssigkeitsströmen aus der Düse (29) als eine Funktion des Stellsignales (146) für gegebene Reihen von Bedingungen umfaßt.

9. Verfahren nach Anspruch 8, bei dem der Schritt des Erzeugens des Stellsignales (146) außerdem die Schritte umfaßt:
Vorsehen eines Werkzeuggeschwindigkeitssignales (128), das der relativen Bewegung zwischen der Düse (29) und dem Werkstück (39) entspricht;
Auswählen des ersten Strömungslinearisierungsfaktors (FLF) als eine Funktion des Werkzeuggeschwindigkeitssignales (128); und
Multiplizieren des Werkzeuggeschwindigkeitssignales (128) mit dem ersten Strömungslinearisierungsfaktor (FLF), um einen linearisierten Werkzeuggeschwindigkeitswert (181) zu erzeugen.

10. Verfahren nach Anspruch 9, bei dem der Schritt des Erzeugens des Stellsignales (146) außerdem die Schritte umfaßt:
Erzeugen des Stellsignales (146) als eine Funktion des Rückführsignales (37) und des linearisierten Werkzeuggeschwindigkeitswertes (181), dadurch Ausgleichen des Stellsignales (146) als eine Funktion der durch die nicht-Newtonsche Flüssigkeit eingeführten Strömungsnichtlinearitäten und Bewirken des Verteilens des Sollstromes der nicht-Newtonschen Flüssigkeit durch das Strombegrenzungsventil (26).

11. Verfahren nach Anspruch 1, das außerdem die Schritte umfaßt:
a) Messen des während mindestens eines Intervalls zum Strombegrenzungsventil (26) geförderten Flüssigkeitsvolumens;
b) Berechnen eines Korrekturfaktors (FCF), der der Differenz zwischen dem gemessenen Volumen und einer Sollgröße entspricht;
c) Multiplizieren eines Signales (181) mit dem Faktor, um das Steuersignal (122) zu erzeugen, und
d) Steuern des Ventiles (26) in Übereinstimmung mit mindestens dem Steuersignal (122), um das verteilte Flüssigkeitsvolumen auf der Sollgröße zu halten.

12. Verfahren nach Anspruch 11, bei dem der Steuerschritt den Schritt des Zuführens eines dem Steuersignal (122) entsprechenden Signales zu einem an das Strombegrenzungsventil (26) angeschlossenen Regelsystem mit Rückführung umfaßt.

13. Verfahren nach Anspruch 11, bei dem der Korrekturfaktor (FCF) einen Quotienten umfaßt, dessen Dividend die Sollgröße und dessen Divisor das gemessene Flüssigkeitsvolumen ist.

14. Verfahren nach Anspruch 1, das außerdem die Schritte umfaßt:
a) Fördern der Flüssigkeit zu dem stromaufwärts von der Düse (29) gelegenen Strombegrenzungsventil (26) unter Druck;
b) Messen des zu dem Strombegrenzungsventil (26) geförderten Flüssigkeitsvolumens über ein Zeitintervall, das ein entsprechendes Meßsignal erzeugt, und
c) Einstellen des Stellsignales (146) in Übereinstimmung mit der Differenz zwischen dem Meßsignal und einer Sollgröße, die ein Sollvolumen der während des Intervalles zu verteilenden Flüssigkeit repräsentiert, so daß das Ventil (26) das Volumen der verteilten Flüssigkeit auf der Sollgröße hält.

15. Verfahren nach Anspruch 14, bei dem der Einstellungsschritt die Schritte umfaßt:
Berechnen eines Korrekturfaktors (FCF), der der Differenz zwischen dem Meßsignal und der Sollgröße entspricht;
Multiplizieren des Steuersignales (122) mit dem Korrekturfaktor, und Erzeugen des Stellsignales (146) aus mindestens dem Steuersignal (122).

16. Verfahren nach Anspruch 1 5, bei dem der Schritt des Erzeugens den Schritt des algebraischen Kombinierens der Differenz mit dem Rückführsignal (37) umfaßt.

17. Verfahren nach Anspruch 16, das außerdem den Schritt umfaßt:
Erzeugen des Steuersignales (122) in Übereinstimmung mit mindestens einem Werkzeuggeschwindigkeitssignal (128) eines Roboters (13), der die relative Bewegung zwischen der Düse (29) und einem Werkstück (39) bewirkt.

18. Der Schritt des Anspruches 17, bei dem das Rückführsignal (37) ein Signal umfaßt, das den Druckabfall an der Düse (29) darstellt.

19. Verfahren nach Anspruch 14, bei dem das Intervall ein Arbeitszyklus ist.

20. Verfahren nach Anspruch 14, das außerdem die Schritte umfaßt:
Anordnen des Ventiles (26) und der Düse (29) ausreichend dicht aneinander, so daß zwischen dem Ventil (26) und der Düse (29) ein sehr geringer Druckabfall auftritt;
Messen eines Parameters an einer Stelle zwischen dem Ventil (26) und der Düse (29), der der Strömungsgeschwindigkeit der aus der Düse (29) ausgetragenen Flüssigkeit entspricht und Erzeugen des Rückführsignales (37);
Erzeugen des Stellsignales (146) aus mindestens dem Rückführsignal (37) und dem Steuersignal (122).

21. Verfahren nach Anspruch 20, das außerdem die Schritte umfaßt:
Berechnen eines Korrekturfaktors (FCF), der der Differenz zwischen dem Meßsignal und der Sollgröße entspricht;
Multiplizieren des Steuersignales (122) mit dem Korrekturfaktor (FCF), und Erzeugen des Stellsignales (146) aus mindestens dem Steuersignal (122).

## Revendications

1. Procédé pour compenser les variations des propriétés d'écoulement d'un fluide distribué par une buse (29) sur une pièce à usiner (39), la buse (29) étant en communication de fluide avec une vanne de dosage (26) répondant à un signal de commande (146), le procédé comprenant les étapes consistant à :
générer le signal de commande (146) pour assurer un écoulement souhaité du fluide à travers la buse (29), ce signal de commande étant corrélé au moins au débit du fluide ; et
caractérisé par la réalisation des étapes suivantes consistant à :
(a) produire un signal de rétroaction (37) corrélé au débit du fluide distribué par la buse (29) ;
(b) générer un signal d'entraînement (122) corrélé à au moins un des éléments suivants :
(i) les propriétés d'écoulement dynamique du fluide distribué, lesdites propriétés d'écoulement dynamique comprenant les non linéarités d'écoulement de pression introduites par les propriétés de viscosité non newtonienne du fluide ; et
(ii) les variations de viscosité intrinsèque du fluide liées à des phénomènes autres que les effets de cisaillement, y compris les variations de température du matériau ainsi que les variations de viscosité d'un lot de matériau à un autre ou les variations de viscosité du matériau dans un lot ; et
(c) générer le signal de commande (146) en fonction dudit signal de rétroaction (37) et dudit signal d'entraînement (122) de manière à amener la vanne de dosage (26) à distribuer un écoulement de fluide souhaité.

2. Procédé selon la revendication 1, dans lequel l'étape consistant à modifier ledit signal de commande (146) comprend en outre les étapes consistant à :
fournir un signal de vitesse d'outil (128) corrélé au déplacement relatif de la buse (29) et de la pièce à usiner (39) ;
modifier ledit signal de vitesse d'outil (128) en fonction des propriétés d'écoulement dynamique du fluide pour produire une valeur de vitesse d'outil linéarisée (181); et
régler ladite valeur de vitesse d'outil linéarisée (181) en fonction des variations de viscosité intrinsèque du fluide pour produire un signal d'entraînement (122).

3. Procédé selon la revendication 2, dans lequel ladite étape consistant à régler ledit signal de vitesse d'outil (128) comprend en outre les étapes consistant à :
sélectionner un coefficient de linéarisation d'écoulement (FLF) sur la base d'un écoulement connu de fluide de la buse (29) en fonction dudit signal de commande (146) pour un ensemble donné de conditions ; et
multiplier ledit signal de vitesse d'outil (128) par ledit coefficient de linéarisation d'écoulement (FLF) pour produire ladite valeur de vitesse d'outil linéarisée (181).

4. Procédé selon l'une quelconque des revendications 1 à 3, dans lequel ladite étape consistant à régler le signal de vitesse d'outil (128) comprend en outre les étapes consistant à :
mesurer un premier volume de fluide distribué à la vanne de dosage (26) pendant un intervalle de temps ;
calculer un coefficient de compensation d'écoulement (FCF) en fonction du premier volume de fluide et d'une référence ; et
régler ledit signal de vitesse d'outil (128) en fonction dudit coefficient de compensation d'écoulement (FCF).

5. Procédé selon la revendication 4, dans lequel ladite étape consistant à régler le signal de vitesse d'outil (128) comprend en outre l'étape consistant à multiplier ledit signal de vitesse d'outil (128) par ledit coefficient de compensation d'écoulement (FCF).

6. Procédé selon la revendication 1, dans lequel l'étape consistant à modifier ledit signal de commande (146) pour compenser les propriétés d'écoulement dynamique comprend également l'étape consistant à :
linéariser ledit signal de commande (146) pour réduire les non linéarités d'écoulement introduites par le fluide non newtonien.

7. Procédé selon la revendication 6, dans lequel ladite étape consistant à linéariser ledit signal de commande (146) comprend en outre les étapes consistant à :
déterminer les coefficients de linéarisation d'écoulement (FLF) sur la base d'écoulements connus du fluide non newtonien dans la buse (29) en fonction du signal de commande (146) pour un ensemble donné de conditions ;
sélectionner un premier coefficient de linéarisation d'écoulement (FLF); et
modifier ledit signal de commande (146) en fonction dudit premier coefficient de linéarisation d'écoulement (FLF).

8. Procédé selon la revendication 7, dans lequel l'étape consistant à déterminer lesdits coefficients de linéarisation d'écoulement (FLF) comprend en outre l'étape consistant à déterminer une série de coefficients de linéarisation d'écoulement (FLF) sur la base d'écoulements connus du fluide non newtonien de la buse (29) en fonction dudit signal de commande (146) pour un ensemble donné de conditions.

9. Procédé selon la revendication 8, dans lequel ladite étape consistant à générer ledit signal de commande (146) comprend en outre les étapes consistant à :
fournir un signal de vitesse d'outil (128) corrélé au déplacement relatif de la buse (29) et de la pièce à usiner (39) ;
sélectionner ledit premier coefficient de linéarisation d'écoulement (FLF) en fonction du signal de vitesse d'outil (128); et
multiplier ledit signal de vitesse d'outil (128) par ledit premier coefficient de linéarisation d'écoulement (FLF) pour produire une valeur de vitesse d'outil linéarisée (181).

10. Procédé selon la revendication 9, dans lequel l'étape consistant à générer ledit signal de commande (146) comprend en outre les étapes consistant à :
produire ledit signal de commande (146) en fonction dudit signal de rétroaction (37) et de ladite valeur de vitesse d'outil linéarisée (181), de manière à compenser ledit signal de commande (146) en fonction des non linéarités d'écoulement introduites par le fluide non newtonien et à amener la vanne de dosage (26) à distribuer l'écoulement souhaité du fluide non newtonien.

11. Procédé selon la revendication 1, comprenant en outre les étapes consistant à :
a) mesurer le volume de fluide distribué à la vanne de dosage (26) pendant au moins un intervalle de temps ;
b) calculer un coefficient de correction (FCF) corrélé à la différence entre ledit volume mesuré et un point déterminé,
c) multiplier un signal (181) par ledit coefficient pour générer ledit signal d'entraînement (122), et
d) commander ladite vanne (26) conformément au moins audit signal d'entraînement (122) pour maintenir le volume de fluide distribué audit point déterminé souhaité.

12. Procédé selon la revendication 11, dans lequel lesdites étapes de commande comprennent l'étape consistant à appliquer un signal corrélé audit signal d'entraînement (122) à un système de rétroaction à boucle fermée couplé à ladite vanne de dosage (26).

13. Procédé selon la revendication 11, dans lequel ledit coefficient de correction (FCF) comprend une division dont le dividende est ledit point déterminé et dont le diviseur est ledit volume de fluide mesuré.

14. Procédé selon la revendication 1, comprenant en outre les étapes consistant à :
a) distribuer le fluide sous pression à la vanne de dosage (26) située en amont de la buse (29) ;
b) mesurer le volume de fluide distribué à ladite vanne de dosage (26) sur un intervalle de temps générant un signal de dosage correspondant, et
c) régler le signal de commande (146) conformément à la différence entre ledit signal de dosage et un point déterminé représentant un volume souhaité de fluide à distribuer pendant ledit intervalle de manière à ce que ladite vanne (26) maintienne le volume de fluide distribué audit point déterminé.

15. Procédé selon la revendication 14, dans lequel ladite étape de réglage comprend les étapes consistant à:
calculer un coefficient de correction (FCF) corrélé à la différence entre ledit signal de dosage et ledit point déterminé ;
multiplier ledit signal d'entraînement (122) par ledit coefficient de correction, et
générer ledit signal de commande (146) à partir au moins dudit signal d'entraînement (122).

16. Procédé selon la revendication 15, dans lequel ladite étape de génération comprend l'étape consistant à combiner algébriquement la différence avec ledit signal de rétroaction (37).

17. Procédé selon la revendication 16, comprenant en outre l'étape consistant à :
générer ledit signal d'entraînement (122) conformément au moins à un signal de vitesse d'outil (128) d'un robot (13) effectuant un déplacement relatif de la buse (29) et d'une pièce à usiner (39).

18. Procédé selon la revendication 17, dans lequel ledit signal de rétroaction (37) comprend un signal représentant la chute de pression dans ladite buse (29).

19. Procédé selon la revendication 14, dans lequel ledit intervalle est un cycle de travail.

20. Procédé selon la revendication 14, comprenant en outre les étapes consistant à :
disposer ladite vanne (26) et ladite buse (29) suffisamment proches l'une de l'autre pour qu'une chute de pression de fluide très faible se produise entre ladite vanne (26) et ladite buse (29) ;
détecter, à un emplacement entre ladite vanne (26) et ladite buse (29), un paramètre corrélé au débit d'écoulement du fluide distribué par la buse (29) et générer ledit signal de rétroaction (37), et
générer ledit signal de commande (146) à partir au moins dudit signal de rétroaction (37) et dudit signal d'entraînement (122).

21. Procédé selon la revendication 20, comprenant en outre les étapes consistant à :
calculer un coefficient de correction (FCF) corrélé à la différence entre ledit signal de dosage et ledit point déterminé ;
multiplier ledit signal d'entraînement (122) par ledit coefficient de correction (FCF), et
générer ledit signal de commande (146) à partir au moins dudit signal d'entraînement (122).
